# EUROPEAN PATENT APPLICATION

(11) **EP 0 869 063 A1**
(43) Date of publication of application: **07.10.1998**
(21) Application number: 97121952.2
(22) Date of filing: 12.12.1997
(51) Int. Cl.: B64G 1/10, B64G 1/22

(54) **Power, data and RF buses for modular spacecraft**

(30) Priority: 20.12.1996 US 771465
(71) Applicant: TRW Inc., Redondo Beach, California 90278 (US)
(72) Inventor: Coronel, Ramon (NMN), Torrance, CA 90503 (US); Eller, Howard S., Redondo Beach, CA 90278 (US)
(74) Representative: Schmidt, Steffen J., Dipl.-Ing.

(57) **Abstract**

A system for interconnecting electronic modules in a spacecraft having multiple modules attached to a spacecraft core structure. An interface bus structure extends along the core structure and includes a power bus, a data bus and a radio-frequency (RF) bus. Each of the modules has a power connector for coupling to the power bus, a data connector for coupling to the data bus, and an RF connector for coupling to at least one of multiple RF channels in the RF bus. A central RF connection box may be included on one of the modules, to effect interconnection of the RF channels in the RF bus, and thereby provide for exchange of RF signals between the modules.

## Description

### BACKGROUND OF THE INVENTION

This invention relates generally to modular spacecraft engineering and, more particularly, to techniques for interconnecting spacecraft electronic equipment modules that are externally mounted on a core spacecraft structure. Conventional spacecraft designs have placed electronic equipment on panels located inside box-like modules, with the panels typically forming the walls of the modules. The modules are mounted onto a spacecraft and interconnected with extremely complex wiring harnesses. This approach makes spacecraft design, integration and testing a costly and time-consuming effort, and renders even small design changes difficult or practically impossible. Clearly, a more modular approach is called for, but efforts to provide a "standard" spacecraft bus, on which equipment and avionics modules are mounted, have not resulted in elimination of the wiring harness as the preferred interconnection medium. The present invention addresses these difficulties and provides an elegant solution to the problem.

### SUMMARY OF THE INVENTION

The present invention resides in a backbone interface for use in a modular spacecraft having a core structure and a plurality of largely independent spacecraft avionics modules. The backbone interface comprises a power bus extending along a spacecraft core structure, for coupling to connectors on modules plugged into the backbone interface and for supplying electrical power to the modules; a conventional data bus also extending along the spacecraft core structure, for coupling to data connectors on the modules plugged into the backbone interface; and a radio-frequency (RF) bus also extending along the spacecraft core structure, having a plurality of waveguide channels for selective coupling to connectors on the modules plugged into the backbone interface. By connecting to the backbone interface, each of the modules receive power from the power bus and can exchange data and RF signals over the data bus and RF bus, respectively.

The invention may also be defined in terms of a spacecraft avionics module interconnection system, comprising a power bus extending along the spacecraft core structure; a conventional data bus also extending along the spacecraft core structure; a radio-frequency (RF) bus also extending along the spacecraft core structure; a power connector in each module, for connecting the module to the power bus; a data bus connector in each module, for connecting to the data bus to permit data communication with other modules; and an RF connector in selected modules, for connecting to the RF bus to permit RF communication with other modules. In the presently preferred embodiment of the invention, the RF bus includes a plurality of waveguides, any of which may be selected for coupling to an RF connector in a module. The system may also include a central RF connection box included in one of the modules and having an RF connector capable of coupling to all of the waveguides in the RF bus. The connector box is, in effect, programmable to effect selective interconnection of the waveguides and thereby establish RF interconnection paths between selected modules.

It will be appreciated from the foregoing that the present invention represents a significant advance in the field of modular spacecraft construction. In particular, the invention provides a convenient technique for interconnecting spacecraft modules without the use of complex wiring harnesses. The backbone interface of the invention also greatly facilitates design changes in spacecraft, because modules that are largely independent of each other can be attached to or removed from the core structure and the backbone interface without affecting the performance of other modules. Other aspects and advantages of the invention will become apparent from the following more detailed description, taken in conjunction with the accompanying drawings.

### BRIEF DESCRIPTION OF THE DRAWINGS

FIG. 1 is an isometric view of three spacecraft equipment modules shown in an operative relationship with a portion of a backbone interface in a spacecraft core structure;
FIG. 2 is an enlarged view, with portions broken away, of a power regulation electronics unit with a power bus connector and an electronics unit with a data bus connector, shown in relation to a portion of the backbone interface;
FIG. 3A is a block diagram showing radio-frequency (RF) connectivity for three illustrative equipment modules; and
FIG. 3B is a diagrammatic view of a portion of a set of microwaveguides used in the backbone interface.

### DESCRIPTION OF THE PREFERRED EMBODIMENT

As shown in the drawings for purposes of illustration, the present invention pertains to apparatus for interconnecting avionics modules in a modular spacecraft. Conventionally, avionics modules on spacecraft are housed in bulky boxes and are interconnected by complex wiring harnesses.

In accordance with the invention, spacecraft avionics modules are externally mounted on a spacecraft core structure, which includes a backbone interface to which the modules are connected to obtain power, and to exchange data and radio-frequency (RF) signals. Instead of a bulky and complicated wiring harness, the backbone interface provides a power bus, a data bus and an RF signal bus, as will now be described in more detail.

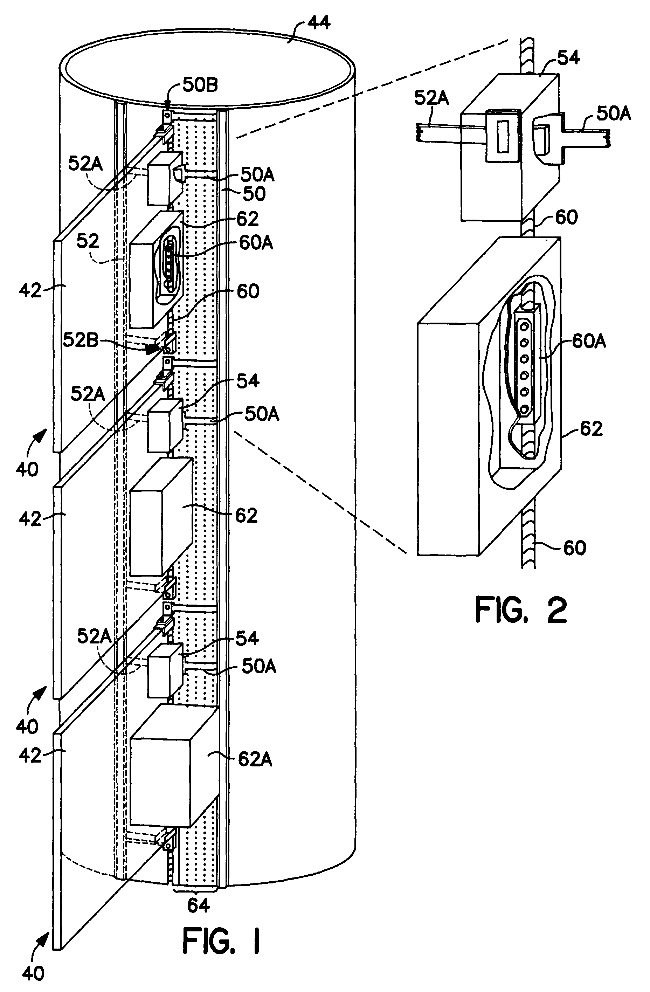

FIG. 1 depicts a portion of a modular spacecraft constructed to utilize the backbone interface of the present invention. Three spacecraft avionics modules 40 are shown by way of example. Each module 40 is constructed on a flat panel 42, shown as being rectangular, and the modules are all secured to a spacecraft core structure 44, shown as a cylinder in the drawing. The modules 40 in the illustrated configuration are aligned in a single plane and extend radially from the core structure 44. The hardware mounting brackets and struts needed to attach the modules mechanically to the core structure 44 have been omitted for clarity. Also omitted for clarity are components used for independent thermal management of each module 40 and, optionally, power regulation and storage. It will be understood, however, that each of the modules 40 is, to a large degree, independent of the core structure 44 and the other modules. In general, the independent modules 40 require just three common services from the core structure: a power supply, a data bus for sending and receiving data in performance of the prescribed module avionics functions, and, in the case of some types of modules, an RF bus for sending and receiving RF signals, also in the performance of the prescribed module functions.

Power is supplied to the modules 40 through a power bus consisting of positive and negative conductors or "rails" 50 and 52, which extend in parallel along the length of the cylindrical core structure 44. The power rails may be embedded in the core structure 44 or external to it. Transverse extensions 50A and 52A of the rails 50 and 52 extend into a power regulation electronics unit 54 integral with each module 40, and thereby supply power to the module. Alternatively, the module can be connected to the power rails 50 and 52 using the module's mechanical attachment points 50B and 52B.

A data bus 60 also extends along the core structure 44, parallel with and between the power rails 50 and 52. The data bus 60 may follow any convenient standard for digital data exchange. Presently preferred is the IEEE 1394 Standard, but instead the well known VME bus could be used, or a standard network protocol such as Ethernet. The data bus 60 itself may be a set of wires, a coaxial cable, or an optical fiber, depending on the specific requirements for data exchange. An avionics unit, indicated by the box 62 on each module 44, contains a data connector 60A, which couples the avionics unit to the data bus 60, to provide for sending and receiving of data over the bus.

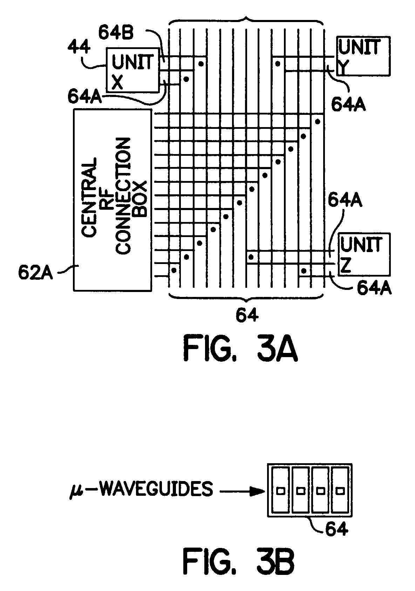

An RF bus is indicated in the drawings at 64, also extending longitudinally along the core structure 44. The bus 64 consists of a number of microwaveguides, four of which are shown in FIG. 3B. These provide a suitably large number of waveguide channels that extend along the spacecraft core structure 44. The microwaveguides may be arranged in a single row, as indicated in FIG. 3B, or they may be stacked in multiple layers, depending on space limitations and RF requirements. Each module 44 with a need to access the RF bus 64 has one or more connectors 64A, indicated diagrammatically by the spaces between horizontal lines extending from the modules 44 in FIG. 3A. The black dots in FIG. 3A indicate that a connection has been made between a connector 64A and one of the microwave channels 64. Physically, the connectors 64A may be microwave probes extending into the individual microwaveguides of the bus 64. Microwave connections between two modules 44 may be established by simply arranging that both have connectors 64A that couple to the same channel of the RF bus 64. Another, more flexible approach is to employ a central RF connection box, indicated at 62A on one of the modules 44. This connection box 62A spans the entire width of the microwave bus 64 and connects to each of its microwaveguide elements, as indicated by the diagonal row of black dots in FIG. 3A. Then each module 44 may be assigned one or more microwave channels and these may be interconnected in any desired manner in the central RF connection box 62A. The hardware inside this box uses conventional microwave "plumbing" principles to interconnect and couple the elements of the RF bus 64 as desired.

It will be appreciated from the foregoing that the present invention represents a significant advance in the field of spacecraft module design. In particular, the invention provides a backbone interface for interconnecting spacecraft avionics modules without the need for cumbersome wiring harnesses and the like. Functionally independent modules can be interconnected as desired to exchange data, RF signals, or both, over data and RF buses, and to receive power over a power bus. It will also be appreciated that, although an embodiment of the invention has been described in detail for purposes of illustration, various modifications may be made without departing from the spirit and scope of the invention. Accordingly, the invention should not be limited except as by the appended claims.

## Claims

1. For use in a modular spacecraft having a core structure and a plurality of largely independent spacecraft avionics modules, a backbone interface, comprising:
a power bus extending along a spacecraft core structure, for coupling to connectors on modules plugged into the backbone interface and for supplying electrical power to the modules;
a conventional data bus also extending along the spacecraft core structure, for coupling to data connectors on the modules plugged into the backbone interface; and
a radio-frequency (RF) bus also extending along the spacecraft core structure, having a plurality of waveguide channels for selective coupling to connectors on the modules plugged into the backbone interface;
whereby the modules receive power from the power bus and can exchange data and RF signals over the data bus and RF bus, respectively.

2. For use in a modular spacecraft having a core structure and a plurality of largely independent spacecraft avionics modules, a module interconnection system, comprising:
a power bus extending along the spacecraft core structure;
a conventional data bus also extending along the spacecraft core structure;
a radio-frequency (RF) bus also extending along the spacecraft core structure;
a power connector in each module, for connecting the module to the power bus;
a data bus connector in each module, for connecting to the data bus to permit data communication with other modules; and
an RF connector in selected modules, for connecting to the RF bus to permit RF communication with other modules.

3. A module interconnection system as defined in claim 2, wherein:
the RF bus includes a plurality of waveguides, any of which may be selected for coupling to an RF connector in a module.

4. A module interconnection system as defied in claim 3, and further comprising:
a central RF connection box included in one of the modules and having an RF connector capable of coupling to all of the waveguides in the RF bus, to effect selective interconnection of the waveguides and thereby establish RF interconnection paths between selected modules.
